# EUROPEAN PATENT APPLICATION

(11) **EP 4 480 938 A1**
(43) Date of publication of application: **25.12.2024**
(21) Application number: 23778805.4
(22) Date of filing: 27.01.2023
(51) Int. Cl.: C04B 35/80, C04B 35/573, C04B 35/577, C04B 35/65, C08J 5/04

(54) **CERAMIC-BASED COMPOSITE MATERIAL FORMING METHOD**

(30) Priority: 31.03.2022 JP 2022059574
(71) Applicant: Mitsubishi Heavy Industries Aero Engines, Ltd., Komaki-shi, Aichi 485-0826, (JP)
(72) Inventor: AKIYAMA, Hiromichi, Tokyo 100-8332 (JP); NISHIGUCHI, Kiichi, Tokyo 100-8332 (JP)
(74) Representative: Studio Torta S.p.A.
(86) International application number: PCT/JP2023/002696
(87) International publication number: WO 2023/188768

(57) **Abstract**

This ceramic-based composite material forming method is for forming a ceramic-based composite material through impregnation with a melt silicon, and involves executing: a step for forming a laminate cured body by laminating and curing a prepreg in which reinforcing fibers and a matrix to be impregnated with the melt silicon are integrally formed; a step for forming an impregnation pathway in the formed laminate cured body by carbonizing the laminate cured body; and a step for impregnating, with the melt silicon, the laminate cured body having the impregnation pathway formed therein. A base material resin included in the matrix at least contains a benzoxazine resin.

## Description

### Technical Field

The present disclosure relates to a method for forming a ceramic matrix composite.

### Background Art

As a method for forming a ceramic matrix composite, a method for producing a ceramic matrix composite using a melt-infiltrated (MI) method is known in the related art (for example, refer to PTL 1). In this production method, a fiber reinforcement material is infiltrated with a matrix slurry containing a resin binder and a pore former to yield a preform, and a porous preform is formed by heating the preform to carbonize the resin binder and promoting formation of pores with the pore former. Next, in the production method, silicon carbide is formed by filling the pores of the porous preform with molten silicon. The resin binder used in the production method is selected from the group consisting of furan resins, phenolic resins, novolac resins, polyester resins, and epoxy resins.

### Citation List

### Patent Literature

[PTL 1] Japanese Unexamined Patent Application Publication No. 2013-241327

### Summary of Invention

### Technical Problem

In the method for forming a ceramic matrix composite as in PTL 1, when silicon carbide is suitably formed, a reaction of molten silicon and carbon can be efficiently performed by using the resin binder having a high residual carbon ratio. For example, use of a phenolic resin having a high residual carbon ratio is considered as the resin binder. However, the phenolic resin is dehydrated and condensed during curing, and thus coarse voids are likely to be formed due to condensed water. The formed coarse voids may be present as they are without being infiltrated with molten silicon, which causes a decrease in strength. In addition, for example, use of an epoxy resin where condensed water is not produced is considered as the resin binder. However, the epoxy resin has a low residual carbon ratio, and thus a large amount of carbon powder as a filler needs to be added to the resin binder. In this case, the powder may aggregate to block an infiltration path of the molten silicon, and thus a non-infiltration region may be formed, which causes a decrease in strength.

Accordingly, an object of the present disclosure is to provide a method for forming a ceramic matrix composite, in which a high-quality ceramic matrix composite can be formed by suitably infiltrating molten silicon to suppress a decrease in strength.

### Solution to Problem

According to the present disclosure, there is provided a method for forming a ceramic matrix composite in which molten silicon is infiltrated to form a ceramic matrix composite, the method including executing: a step of forming a laminated cured body by laminating and curing a prepreg where reinforced fiber and a matrix infiltrated with the molten silicon are integrated; a step of forming an infiltration path in the laminated cured body by carbonizing the formed laminated cured body; and a step of infiltrating the laminated cured body where the infiltration path is formed with the molten silicon, in which a matrix resin in the matrix contains at least a benzoxazine resin.

### Advantageous Effects of Invention

According to the present disclosure, it is possible to provide a method for forming a ceramic matrix composite, in which a high-quality ceramic matrix composite can be formed by suitably infiltrating molten silicon to suppress a decrease in strength.

### Brief Description of Drawings

Fig. 1 is a cross-sectional view showing a ceramic matrix composite according to an embodiment.
Fig. 2 is a diagram showing a method for forming a ceramic matrix composite according to the present embodiment. Description of Embodiments

Hereinafter, an embodiment according to the present disclosure will be described in detail with reference to the drawings. The present invention is not limited to this embodiment. In addition, components in the embodiment described below include those that can be easily replaced by those skilled in the art, or those that are substantially the same. Furthermore, the components described below can be combined as appropriate, and when a plurality of embodiments are present, the embodiments can be combined.

### [Embodiment]

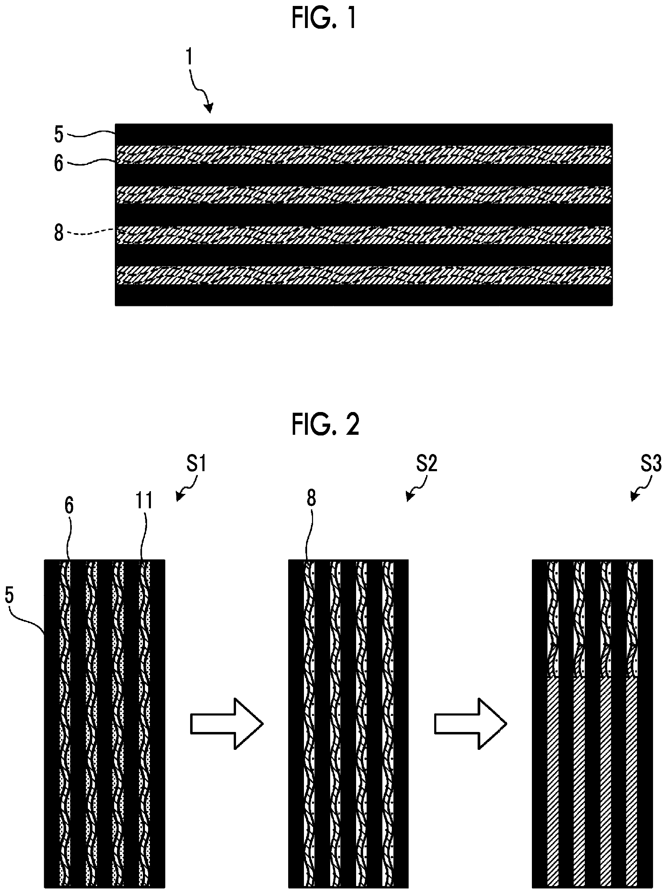

Fig. 1 is a cross-sectional view showing a ceramic matrix composite according to the present embodiment. Fig. 2 is a diagram showing a method for forming a ceramic matrix composite according to the present embodiment.

The method for forming a ceramic matrix composite according to the present embodiment is a forming method using a melt-infiltrated method (MI method). The ceramic matrix composite is, for example, a silicon carbide (SiC) composite material, specifically, a SiC fiber reinforced SiC matrix composite (SiC/SiC composite material). Prior to the description of the method for forming a ceramic matrix composite, a ceramic matrix composite 1 that is a SiC/SiC composite material will be described with reference to Fig. 1. The ceramic matrix composite is not particularly limited to the SiC/SiC composite material, and may be any ceramic matrix composite that can be formed by the forming method according to the present embodiment.

### (Ceramic Matrix Composite)

As shown in Fig. 1, the ceramic matrix composite 1 is formed of a prepreg where a fiber layer 5 containing ceramic matrix reinforced fiber and a matrix layer 6 containing a matrix infiltrated with the fiber layer 5 are integrated.

The fiber layer 5 is a layer containing fiber as a major component, and SiC fiber is applied as the ceramic matrix reinforced fiber. The fiber layer 5 is formed by infiltrating the matrix containing the matrix resin with SiC fiber, curing the infiltrated matrix to obtain a preform, and carbonizing the preform to infiltrate the preform with molten silicon for a reaction. As the prepreg, for example, a unidirectional material where a fiber direction of SiC fiber is unidirectional is used, and is laminated while changing the fiber direction.

The matrix layer 6 is a layer containing silicon carbide. The matrix layer 6 is a layer containing the matrix infiltrated with the fiber layer 5. The laminated cured body containing the fiber layer 5 and the matrix layer 6 are formed by forming an infiltration path 8 by carbonization and infiltrating the infiltration path 8 with molten silicon for a reaction.

Fiber 11 (refer to Fig. 2) described below may be provided between the prepregs. The laminated cured body is formed by carbonizing the fiber 11 to form the infiltration path 8 and infiltrating the infiltration path 8 with molten silicon for a reaction. The infiltration path 8 formed in the matrix layer 6 is formed to communicate with a space filled with the molten silicon along an in-plane direction orthogonal to a lamination direction of the fiber layer 5. By infiltrating the infiltration path 8 with molten silicon, the matrix layer 6 is a layer where silicon carbide is formed along the infiltration path 8.

Here, the matrix resin in the matrix will be described. The matrix resin contains at least a benzoxazine resin. In the present embodiment, as the matrix resin, for example, a thermosetting resin where a benzoxazine resin and an epoxy resin are mixed is used. In the benzoxazine resin, a thermosetting reaction is a ring-opening polymerization, and condensed water is not produced during thermosetting. In addition, the benzoxazine resin contains a large amount of a benzene ring, and thus a residual carbon ratio is high. Here, the residual carbon ratio is a ratio of carbon in the carbonized matrix resin. The residual carbon ratio in the matrix resin is in a range of 10% or more and 55% or less and preferably in a range of more than 25% and 45% or less. In addition, in the evaluation of the residual carbon ratio, the residual carbon ratio in the matrix resin is 35%, and this residual carbon ratio is evaluated as suitable.

On the other hand, the matrix resin is infiltrated with SiC fiber to form a prepreg. Therefore, in order to ensure tackiness and flexibility, an epoxy resin having a lower viscosity than the benzoxazine resin is mixed. At this time, a ratio of the epoxy resin to the benzoxazine resin is "benzoxazine resin:epoxy resin = 10:1 to 100 (wt% ratio)". In other words, the epoxy resin has a wt% ratio in a range of 1/10 to 10 with respect to the benzoxazine resin as 1. In addition, the ratio of the epoxy resin to the benzoxazine resin is more suitable in a range of "benzoxazine resin:epoxy resin = 8:2 (wt% ratio) to 3:7 (wt% ratio)".

In addition, the matrix resin may contain a filler, and at least one of carbon as powder and silicon carbide as powder may be used as the filler. In the present embodiment, the matrix resin contains carbon as powder and silicon carbide as powder. That is, the matrix resin in the present embodiment is a thermosetting resin containing the filler. In the present embodiment, as an example, a ratio between the matrix resin, the silicon carbide as powder, and the carbon as powder is "resin:silicon carbide:carbon = 41: 50: 9 (wt% ratio)".

Here, a ratio of the resin in the matrix resin may be in a range of more than 0% and 50% or less, and is desirably in a range of 10% or more and 30% or less. In addition, a ratio of the silicon carbide may be in a range of 0% or more and 95% or less, and is desirably in a range of 30% or more and 60% or less. Further, a ratio of the carbon may be in a range of 0% or more and 50% or less, and is desirably in a range of 0% or more and 30% or less. It is needless to say that the sum of the ratio of the resin, the ratio of the silicon carbide, and the ratio of the carbon does not exceed 100%, that is, is 100% or less. That is, the matrix resin where the sum of the ratios is 100% or less while the range of the ratio of the resin, the range of the ratio of the silicon carbide, and the range of the ratio of the carbon are satisfied is used.

### (Method for Forming Ceramic Matrix Composite)

Next, a method for forming the ceramic matrix composite 1 will be described with reference to Fig. 2. In the method for forming the ceramic matrix composite 1, first, the laminated cured body is formed by laminating and curing a prepreg where the fiber layer 5 and the matrix layer 6 are integrated (Step S1). In Step S1, the fiber 11 may be disposed between the laminated prepregs. In this case, in Step S1, the prepreg and the fiber 11 are alternately and repeatedly laminated. In Step S1, the prepreg and the fiber 11 are further integrated to form a sheet, and a plurality of sheets are repeatedly laminated. Next, in Step S1, the laminated prepregs are heated to form the laminated cured body. The fiber 11 used in the matrix layer 6 is an inorganic fiber such as carbon fiber to which a binder resin is attached or SiC fiber to which a binder resin is attached, or an organic fiber. The binder resin may also be attached to the organic fiber. In addition, the fiber 11 used in the matrix layer 6 is nonwoven fabric, woven fabric, or a unidirectional material. Therefore, the fiber direction of the fiber 11 used in the matrix layer 6 is a direction along an in-plane direction of the laminate.

Next, in the method for forming the ceramic matrix composite 1, the infiltration path 8 is formed along the in-plane direction of the laminated cured body by carbonizing the formed laminated cured body (Step S2). When the laminated cured body is carbonized, the infiltration path 8 is formed by carbonizing the matrix resin of the matrix.

When the laminated cured body including the fiber 11 is carbonized, the infiltration path 8 is formed along the fiber direction (in-plane direction) by carbonizing the fiber 11, for example, carbonizing the binder resin in the case of the carbon fiber or the SiC fiber or carbonizing the fiber itself in the case of the organic fiber. The binder resin and the organic fiber are resins having a lower volatile onset temperature than the matrix resin. For example, when a resin where a benzoxazine resin and an epoxy resin are mixed is used as the matrix resin, polyvinyl chloride (PVC), polymethyl methacrylate (PMMA, acryl), or the like is used for the binder resin and the organic fiber. In Step S2, by carbonizing the laminated cured body, the laminated cured body where the infiltration path 8 is formed is formed as a precursor of the ceramic matrix composite 1.

In addition, in Step S2, the benzoxazine resin and the epoxy resin in the matrix resin of the laminated cured body are carbonized. Therefore, the laminated cured body having a high residual carbon ratio is formed.

During the carbonization of the laminated cured body where the fiber 11 is provided, when the fiber 11 is the carbon fiber or the SiC fiber in Step S2, carbon is formed in the infiltration path 8 infiltrated with molten silicon by carbonizing the binder resin attached to the fiber 11. In addition, when the fiber 11 of the matrix layer 6 is the organic fiber in Step S2, the infiltration path 8 infiltrated with molten silicon is formed and carbon is formed in the infiltration path 8 by carbonizing the fiber 11 itself. The infiltration path 8 formed in Step S2 functions as a degassing path of cracked gas produced by carbonizing the matrix resin, and thus can suppress cracking of the laminate.

Next, in the method for forming the ceramic matrix composite 1, the laminated cured body as the precursor where the infiltration path 8 is formed is infiltrated with molten silicon (Step S3). In Step S3, molten silicon is infiltrated along the infiltration path 8 formed in Step S2. The infiltrated molten silicon reacts with carbon in the infiltration path 8, carbon in the carbonized matrix resin, and carbon of the filler in the matrix resin to form silicon carbide. By executing Step S3, the method for forming the ceramic matrix composite 1 ends.

In the laminated cured body where the fiber 11 is provided, when the fiber 11 is the carbon fiber, the molten silicon reacts with the carbon fiber to form SiC fiber.

As described above, the method for forming the ceramic matrix composite described in the present embodiment is grasped, for example, as follows.

A method for forming a ceramic matrix composite 1 according to a first aspect is a method for forming a ceramic matrix composite 1 in which molten silicon is infiltrated to form a ceramic matrix composite 1, the method including executing: a step S1 of forming a laminated cured body by laminating and curing a prepreg where reinforced fiber and a matrix infiltrated with the molten silicon are integrated; a step S2 of forming an infiltration path in the laminated cured body by carbonizing the formed laminated cured body; and a step S3 of infiltrating the laminated cured body where the infiltration path is formed with the molten silicon, in which a matrix resin in the matrix contains at least a benzoxazine resin.

In this configuration, the matrix resin contains the benzoxazine resin. As a result, during carbonization, the residual carbon ratio of the matrix resin can be improved without producing condensed water. Therefore, molten silicon can be suitably infiltrated without blocking the infiltration path 8, and molten silicon and carbon can be suitably caused to react with each other to form silicon carbide. As a result, a high-quality ceramic matrix composite where a decrease in strength is suppressed can be formed.

In a second aspect, the matrix resin further contains an epoxy resin.

In this configuration, the epoxy resin having a lower viscosity than the benzoxazine resin is mixed. As a result, the matrix resin suitable for the prepreg can be obtained. That is, the prepreg containing the matrix resin can have tackiness and flexibility.

In a third aspect, in the matrix resin, a ratio of the epoxy resin to the benzoxazine resin is "benzoxazine resin:epoxy resin = 10:1 to 100 (wt% ratio)".

With this configuration, a suitable prepreg having tackiness and flexibility can be obtained.

In a fourth aspect, the ratio of the epoxy resin to the benzoxazine resin is "benzoxazine resin:epoxy resin = 8:2 (wt% ratio) to 3:7 (wt% ratio)".

With this configuration, an optimal prepreg having tackiness and flexibility can be obtained.

In a fifth aspect, when a ratio of carbon in the carbonized matrix resin is represented by a residual carbon ratio, the residual carbon ratio of the matrix resin is in a range of 10% or more and 55% or less.

With this configuration, a residual carbon ratio optimal for the reaction of the molten silicon can be obtained.

In a sixth aspect, the residual carbon ratio of the matrix resin is in a range of more than 25% and 45% or less.

With this configuration, a residual carbon ratio more optimal for the reaction of the molten silicon can be obtained.

In a seventh aspect, the matrix resin contains a filler, the filler contains silicon carbide as powder and carbon as powder, a ratio of a resin in the matrix resin is in a range of more than 0% and 50% or less, a ratio of the silicon carbide is in a range of 0% or more and 95% or less, and a ratio of the carbon is in a range of 0% or more and 50% or less.

With this configuration, a laminate having an optimal residual carbon ratio can be formed.

In an eighth aspect, the ratio of the resin in the matrix resin is in a range of 10% or more and 30% or less, the ratio of the silicon carbide is in a range of 30% or more and 60% or less, and the ratio of the carbon is in a range of 0% or more and 30% or less.

With this configuration, a laminate having a more optimal residual carbon ratio can be formed.

In a ninth aspect, the matrix contains fiber 11 extending in an infiltration direction of the molten silicon, and a temperature of the fiber 11 is lower than a volatile onset temperature of the matrix resin.

With this configuration, during the carbonization of the laminated cured body, the fiber 11 can be volatilized prior to the matrix resin. As a result, the infiltration path 8 can be used as a flow path for volatilizing a volatile component of the matrix resin. Therefore, occurrence of cracking can be suppressed.

### Reference Signs List

- 1:: ceramic matrix composite
- 5:: fiber layer
- 6:: matrix layer
- 8:: infiltration path
- 11:: fiber

## Claims

1. A method for forming a ceramic matrix composite in which molten silicon is infiltrated to form a ceramic matrix composite, the method comprising executing:
a step of forming a laminated cured body by laminating and curing a prepreg where reinforced fiber and a matrix infiltrated with the molten silicon are integrated;
a step of forming an infiltration path in the laminated cured body by carbonizing the formed laminated cured body; and
a step of infiltrating the laminated cured body where the infiltration path is formed with the molten silicon,
wherein a matrix resin in the matrix contains at least a benzoxazine resin.

2. The method for forming a ceramic matrix composite according to claim 1,
wherein the matrix resin further contains an epoxy resin.

3. The method for forming a ceramic matrix composite according to claim 2,
wherein in the matrix resin, a ratio of the epoxy resin to the benzoxazine resin is "benzoxazine resin:epoxy resin = 10:1 to 100 (wt% ratio)".

4. The method for forming a ceramic matrix composite according to claim 3,
wherein the ratio of the epoxy resin to the benzoxazine resin is "benzoxazine resin:epoxy resin = 8:2 (wt% ratio) to 3:7 (wt% ratio)".

5. The method for forming a ceramic matrix composite according to any one of claims 1 to 4,
wherein when a ratio of carbon in the carbonized matrix resin is represented by a residual carbon ratio,
the residual carbon ratio of the matrix resin is in a range of 10% or more and 55% or less.

6. The method for forming a ceramic matrix composite according to claim 5,
wherein the residual carbon ratio of the matrix resin is in a range of more than 25% and 45% or less.

7. The method for forming a ceramic matrix composite according to any one of claims 1 to 5,
wherein the matrix resin contains a filler,
the filler contains silicon carbide as powder and carbon as powder,
a ratio of a resin in the matrix resin is in a range of more than 0% and 50% or less,
a ratio of the silicon carbide is in a range of 0% or more and 95% or less, and
a ratio of the carbon is in a range of 0% or more and 50% or less.

8. The method for forming a ceramic matrix composite according to claim 7,
wherein the ratio of the resin in the matrix resin is in a range of 10% or more and 30% or less,
the ratio of the silicon carbide is in a range of 30% or more and 60% or less, and
the ratio of the carbon is in a range of 0% or more and 30% or less.

9. The method for forming a ceramic matrix composite according to any one of claims 1 to 8,
wherein the matrix contains fiber extending in an infiltration direction of the molten silicon, and
a temperature of the fiber is lower than a volatile onset temperature of the matrix resin.
